# EUROPÄISCHE PATENTSCHRIFT

(11) **EP 3 390 195 B1**
(45) Veröffentlichungstag und Bekanntmachung des Hinweises auf die Patenterteilung: **29.01.2020**
(21) Anmeldenummer: 17705369.1
(22) Anmeldetag: 14.02.2017
(51) Int. Cl.: B61D 35/00, B60R 15/00

(54) **SANITÄREINRICHTUNG FÜR EIN FAHRZEUG**
PLUMBING APPLIANCE FOR A VEHICLE
INSTALLATION SANITAIRE POUR UN VÉHICULE

(30) Priorität: 02.03.2016 DE 102016203385
(43) Veröffentlichungstag der Anmeldung: 24.10.2018
(73) Patentinhaber: Siemens Mobility GmbH, 81739 München (DE)
(72) Erfinder: BRAUN, Michael, 50825 Köln (DE); GÄRTNER, Ralph, 41379 Brüggen (DE)
(86) Internationale Anmeldenummer: PCT/EP2017/053222
(87) Internationale Veröffentlichungsnummer: WO 2017/148694

(56) Entgegenhaltungen:
- WO-A1-2013/083317
- WO-A1-2014/056768
- DE-A1-102009 051 351
- DE-A1-102009 051 832
- DE-U1- 9 316 440

## Beschreibung

Die vorliegende Erfindung betrifft eine Sanitäreinrichtung für ein Fahrzeug, umfassend einen Flüssigkeitsbehälter zur Versorgung einer Verbraucherzelle, insbesondere einer Nasszelle.

Weiterhin betrifft die Erfindung ein Fahrzeug, insbesondere ein Schienenfahrzeug, mit einer solchen Sanitäreinrichtung.

Eine gattungsgemäße Sanitäreinrichtung für ein Fahrzeug ist aus der DE 10 2009 051 351 A1 bekannt.

Die Aufgabe besteht darin, eine Sanitäreinrichtung mit vergleichsweise hohem Nutzungskomfort bereitzustellen, bei der eine gleichmäßige Flüssigkeitsversorgung aller Nasszellen gewährleistet wird.

Erfindungsgemäß wird eine Sanitäreinrichtung für ein Fahrzeug zur Verfügung gestellt, welche wenigstens zwei räumlich getrennte Flüssigkeitsbehälter zur Versorgung jeweils einer Verbraucherzelle umfasst, wobei die wenigstens zwei Flüssigkeitsbehälter über eine Niveauregulierungseinrichtung miteinander fluidverbunden sind.

Die Sanitäreinrichtung mit wenigstens zwei räumlich getrennten Flüssigkeitsbehältern, die über eine Niveauregulierungseinrichtung miteinander fluidverbunden sind, hat den Vorteil, dass die Flüssigkeitsbehälter unter optimaler Ausnutzung der typischerweise beschränkten Platzverhältnisse im Fahrzeug platziert werden können und dennoch eine gleichmäßige Verfügbarkeit der Flüssigkeitszufuhr zu den Verbraucherzellen gewährleistet wird. Die Niveauregulierungseinrichtung sorgt dafür, dass die Füllstände der wenigstens zwei Flüssigkeitsbehälter voneinander abhängig sind, sodass die Flüssigkeitsversorgung aller Verbraucherzellen während eines vergleichsweise langen Nutzungszeitraums gewährleistet ist. Die Flüssigkeitsversorgung aller Verbraucherzellen endet innerhalb eines vergleichsweise kurzen Zeitraums, insbesondere gleichzeitig, dann, wenn die Gesamtmenge der in allen Flüssigkeitsbehältern bevorrateten Flüssigkeit verbraucht ist.

Insbesondere bedeutet der Ausdruck "wenigstens zwei räumlich getrennte Flüssigkeitsbehälter", dass es sich hierbei um zwei oder mehr Flüssigkeitsbehälter handelt, die räumlich getrennt voneinander im Fahrzeug platzierbar sind, sodass räumlich getrennte Verbraucherzellen durch jeweils eine der zwei oder mehr Flüssigkeitsbehälter mit der darin enthaltenen Flüssigkeit versorgt werden können. Dies schließt insbesondere nicht aus, dass die zwei oder mehr Flüssigkeitsbehälter nebeneinander aufgestellt werden. Bevorzugt werden die zwei oder mehr Flüssigkeitsbehälter entfernt voneinander platziert, wenn dadurch der verfügbare Raum im Fahrzeug optimal ausgenutzt werden kann.

Insbesondere bedeutet der Ausdruck "wenigstens zwei räumlich getrennte Flüssigkeitsbehälter zur Versorgung jeweils einer Verbraucherzelle", dass an jedem Flüssigkeitsbehälter zumindest eine Verbraucherzelle anschließbar bzw. angeschlossen ist, um mit der Flüssigkeit des Flüssigkeitsbehälters versorgt zu werden. Bevorzugt ist die Sanitäreinrichtung derart eingerichtet, dass die (unmittelbare) Flüssigkeitsversorgung für jede Verbraucherzelle durch einen der jeweiligen Verbraucherzelle eineindeutig zugeordneten Flüssigkeitsbehälter erfolgt.

Da die wenigstens zwei Flüssigkeitsbehälter über eine Niveauregulierungseinrichtung miteinander fluidverbunden sind, werden die Füllstände der wenigstens zwei Flüssigkeitsbehälter bei ungleichmäßigem Flüssigkeitsverbrauch durch die Verbraucherzellen aneinander angeglichen. Dadurch wird gewährleistet, dass alle Verbraucherzellen der Sanitäreinrichtung in gleichem Maße verfügbar sind und die Verfügbarkeit im Wesentlichen gleichzeitig endet.

Insbesondere umfasst die Niveauregulierungseinrichtung wenigstens eine Niveauregulierungsleitung, welche die wenigstens zwei Flüssigkeitsbehälter miteinander verbindet, um die Füllstände der wenigstens zwei Flüssigkeitsbehälter aneinander anzugleichen, wenn beispielsweise unterschiedliche Mengen Flüssigkeit aus den Flüssigkeitsbehältern entnommen werden. Insbesondere umfasst die Sanitäreinrichtung eine Ausgleichseinrichtung zum Ausgleichen von Gasdruckunterschieden zwischen den Flüssigkeitsbehältern.

Bevorzugt handelt es sich bei den Verbraucherzellen um Nasszellen und bei den Flüssigkeitsbehältern um Frischwasserbehälter für die Nasszellen. Insbesondere umfassen die Verbraucherzellen eine (Hand-)Wascheinrichtung und/oder eine WC-Einrichtung, die mit der Flüssigkeit aus den Flüssigkeitsbehältern versorgt werden.

Wenn im Folgenden von einem Frischwasserbehälter gesprochen wird, ist damit immer eine Frisch- oder Trinkwasserbehälter gemeint. Unter einer WC-Einrichtung kann eine Toilette mit oder ohne Bidetfunktion, ein Bidet oder ein Urinal verstanden werden.

Gemäß einer bevorzugten Weiterbildung der Sanitäreinrichtung ist vorgesehen, dass die Sanitäreinrichtung wenigstens eine Eingangsleitung zur Befüllung der wenigstens zwei Flüssigkeitsbehälter aufweist, wobei eine erste Eingangsleitung der wenigstens einen Eingangsleitung ausschließlich mit einem ersten Flüssigkeitsbehälter der wenigstens zwei Flüssigkeitsbehälter fluidverbunden ist.

Hierdurch können die wenigstens zwei Flüssigkeitsbehälter über eine gemeinsame Eingangsleitung befüllt werden, wobei der erste Flüssigkeitsbehälter unmittelbar über die Eingangsleitung befüllt wird und ein zweiter (und ggf. ein oder mehrere weitere) Flüssigkeitsbehälter mittelbar über die Niveauregulierungseinrichtung befüllt wird.

Gemäß einer weiteren bevorzugten Weiterbildung der Sanitäreinrichtung ist vorgesehen, dass eine zweite Eingangsleitung der wenigstens einen Eingangsleitung ausschließlich mit einem zweiten Flüssigkeitsbehälter der wenigstens zwei Flüssigkeitsbehälter fluidverbunden ist.

Hierdurch können die wenigstens zwei Flüssigkeitsbehälter über zwei verschiedene Eingangsleitungen befüllt werden, wobei die beiden Eingangsleitungen bevorzugt auf zwei unterschiedlichen Seiten des Fahrzeugs angeordnet sind, sodass eine Befüllung von beiden Fahrzeugseiten her ermöglicht wird.

Gemäß einer weiteren bevorzugten Weiterbildung der Sanitäreinrichtung ist vorgesehen, dass die Sanitäreinrichtung eine Ausgangsleitung, insbesondere zur Frostentleerung, umfasst, wobei die Ausgangsleitung mit der Niveauregulierungseinrichtung verbunden ist.

Hierdurch können alle Flüssigkeitsbehälter, die über die Niveauregulierungsleitung miteinander fluidverbunden sind, über eine gemeinsame Entleerungsleitung entleert werden, sodass eine Sanitäreinrichtung mit einfachem Aufbau und vergleichsweise geringer Anzahl von Leitungen bereitgestellt wird.

Gemäß einer weiteren bevorzugten Weiterbildung der Sanitäreinrichtung ist vorgesehen, dass die Ausgangsleitung mit der Niveauregulierungseinrichtung über ein Ventil, insbesondere ein Magnetventil, verbunden ist.

Hierdurch kann eine gemeinsame Entleerung aller Flüssigkeitsbehälter auf vergleichsweise einfache Weise zentral gesteuert werden.

Gemäß einer weiteren bevorzugten Weiterbildung der Sanitäreinrichtung ist vorgesehen, dass die Sanitäreinrichtung wenigstens zwei Überlauf-Entlüftungsleitungen aufweist, die mit jeweils einem der wenigstens zwei Flüssigkeitsbehälter und mit der Ausgangsleitung fluidverbunden sind.

Hierdurch wird eine Sanitäreinrichtung bereitgestellt, die im Wesentlichen frei von Leckage ist, zumal keine Öffnungen in den Flüssigkeitsbehältern erforderlich sind, um den Flüssigkeitsstand auszugleichen. Auf diese Weise kann ein unkontrollierter Flüssigkeitsverlust während der Fahrt verhindert werden, sodass die Flüssigkeitsbehälter im Fahrzeuginnenraum platziert werden können. Ferner ermöglicht die Verwendung von Überlauf-Entlüftungsleitungen eine vergleichsweise gute Isolierung der Flüssigkeitsbehälter, sodass beispielsweise das Eindringen von Verunreinigungen weitgehend verhindert werden kann. Die Isolierung ist auch aus thermischen Gründen bzgl. der Frostsicherheit von Vorteil.

Ein weiterer Gegenstand ist ein Fahrzeug mit einer Sanitäreinrichtung gemäß einer Ausführungsform der vorliegenden Erfindung, wobei das Fahrzeug wenigstens einen Wagen aufweist, wobei die Sanitäreinrichtung innerhalb desselben Wagens angeordnet ist.

Dadurch, dass die wenigstens zwei räumlich getrennten Flüssigkeitsbehälter über die Niveauregulierungseinrichtung miteinander fluidverbunden sind, können diese räumlich getrennt voneinander derart innerhalb desselben Wagen angeordnet werden, dass der verfügbare Raum optimal ausgenutzt werden kann.

Gemäß einer bevorzugten Weiterbildung des Fahrzeugs ist vorgesehen, dass das Fahrzeug ein Schienenfahrzeug ist.

Hierdurch wird der Nutzerkomfort durch eine verbesserte Verfügbarkeit von Verbraucherzellen, beispielsweise WC-Einrichtungen und/oder (Hand-)Wascheinrichtungen, in dem Schienenfahrzeug erhöht, welche aufgrund der Schienengebundenheit eine vergleichsweise geringe Flexibilität hinsichtlich des Wiederauffüllens der Vorratsbehälter aufweisen.

Gemäß einer weiteren bevorzugten Weiterbildung des Fahrzeugs ist vorgesehen, dass die wenigstens zwei Flüssigkeitsbehälter dezentral in demselben Wagen angeordnet sind.

Hierdurch wird die gleichmäßige Versorgung räumlich getrennter und dezentral innerhalb desselben Wagens angeordneter Verbraucherzellen mit der Flüssigkeit aus den wenigstens zwei räumlich getrennten Flüssigkeitsbehältern ermöglicht, wobei die Flüssigkeitsbehälter insbesondere in räumlicher Nähe zu den jeweiligen Verbraucherzellen angeordnet sind.

Gemäß einer weiteren bevorzugten Weiterbildung des Fahrzeugs ist vorgesehen, dass der Wagen einen Dachbereich, einen Unterflurbereich und einen Wageninnenraum zwischen dem Dachbereich und dem Unterflurbereich aufweist, wobei die wenigstens zwei Flüssigkeitsbehälter hauptsächlich in dem Wageninnenraum angeordnet sind. Durch die dezentrale Anordnung der Flüssigkeitsbehälter (d.h. insbesondere die Verlagerung vom Dachbereich in den Fahrzeuginnenraum) wird die Schwerpunktlage des Wagens in Richtung auf die Fahrzeugunterseite hin verlagert, wodurch die fahrdynamischen Eigenschaften des Fahrzeugs verbessert werden können.

Hierdurch wird der Wageninnenraum vergleichsweise effizient ausgenutzt, um sowohl die Verbraucherzellen als auch die jeweils (eindeutig) zugewiesenen Flüssigkeitsbehälter in dem Wageninnenraum zu platzieren, sodass insbesondere die Unterbringung von Flüssigkeitsbehältern im Dachbereich vermieden wird. Der dadurch im Dachbereich freigewordene Platz kann auf flexible Weise für die Anordnung anderer Komponenten genutzt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
Figur 1 ein Fahrzeug gemäß einer Ausführungsform in einer schematischen Seitenansicht,
Figur 2 eine Sanitäreinrichtung gemäß einer Ausführungsform in einer schematischen Querschnittansicht und
Figur 3 eine Sanitäreinrichtung gemäß einer Ausführungsform in einer schematischen Ansicht.

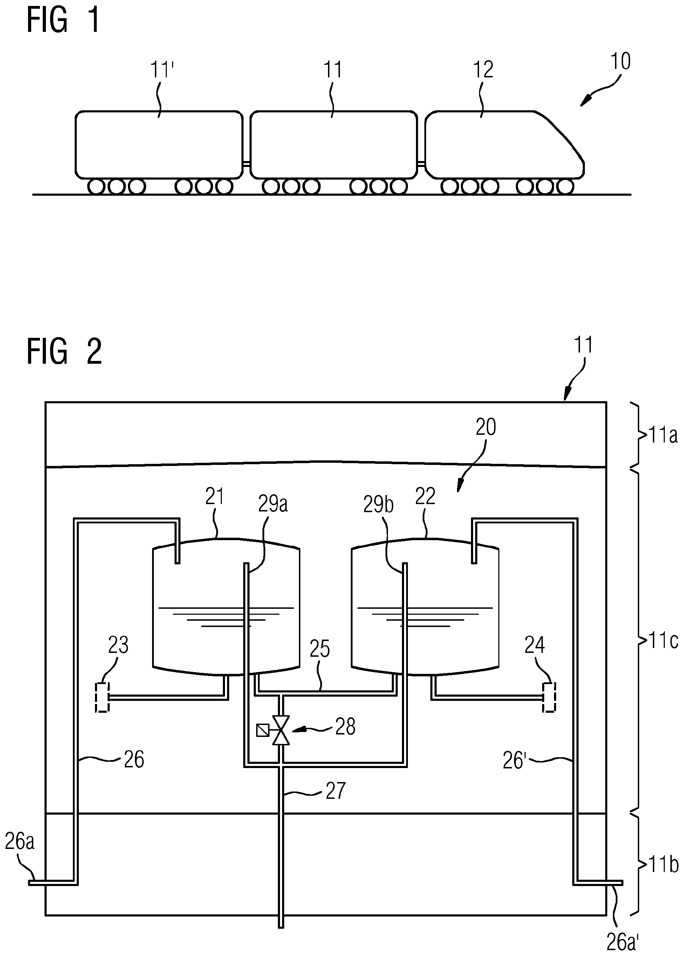

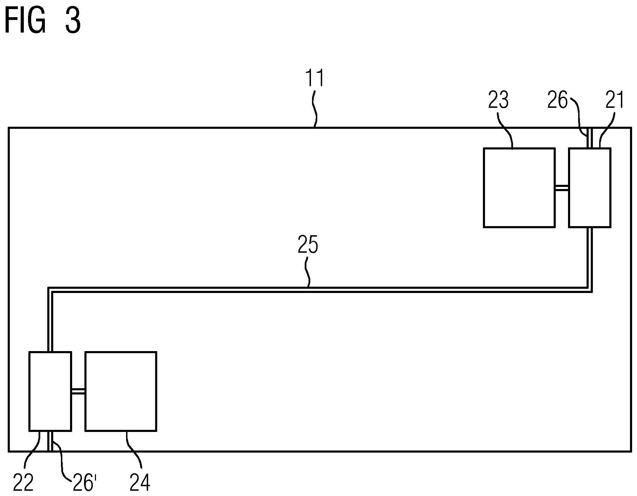

In der Figur 1 ist ein Fahrzeug 10 gemäß einer Ausführungsform in einer schematischen Seitenansicht gezeigt, wobei das Fahrzeug 10 wenigstens einen Anhänger 11, 11' und einen Zugwagen 12 umfasst. Die Erfindung ist auf diese Anordnung nicht beschränkt. Das Fahrzeug 10 kann alternativ auch aus einem einzigen Wagen bestehen. Die Erfindung bezieht sich auf Antriebswagen mit Anhängern als auch auf Triebzüge. In diesem Ausführungsbeispiel handelt es sich bei dem Fahrzeug 10 aber um ein Schienenfahrzeug, mit einem oder mehreren Waggons 11, 11' und einem Zugwagen 12. Das Fahrzeug 10 ist zur Personenbeförderung vorgesehen, weshalb die Waggons 11, 11' eine Sanitäreinrichtung 20 aufweisen, welche im Zusammenhang mit Figuren 2 und 3 näher beschrieben wird.

Die in solchen Schienenfahrzeugen 10 vorgesehenen Sanitäreinrichtungen umfassen typischerweise die komplette Frisch- oder Trinkwasseranlage, die Nasszellen inklusive der WC-Systeme sowie die Abwasseranlage. Wenn jedoch unabhängig von der Anzahl der Nasszellen pro Wagen lediglich ein einzelner Frischwasserbehälter als Versorgungsbehälter für die Verbraucher (z.B. WC-Modul, Handwaschwassermodul) aller Nasszellen innerhalb des entsprechenden Wagens vorgesehen ist, so kann der verfügbare Bauraum zur Unterbringung der Sanitäreinrichtung nicht effizient genutzt werden und lediglich eine vergleichsweise geringe Anzahl von Nasszellen pro Wagen erreicht werden.

Wenn hingegen separate (d.h. räumlich getrennte und fluidtechnisch voneinander isolierte) Frischwasserbehälter vorgesehen sind, um den verfügbaren Bauraum effizienter auszunutzen, so führt dies dazu, dass bei einer Befüllung aller separaten Frischwasserbehälter ein vergleichsweise hoher Befüllungs- und Zeitaufwand benötigt wird. Darüber hinaus kann eine unterschiedliche Entnahme von Frischwasser aus den Behältern dazu führen, dass während des Fahrzeugbetriebs (d.h. beispielsweise während der Zugreise) ein Behälter vor dem anderen Behälter leer ist (unterschiedliche Füllstände im Betrieb) und dies zu einem früheren Ausfall der entsprechenden Nasszelle führt.

Bei der erfindungsgemäßen Sanitäreinrichtung wird ein vergleichsweiser hoher Nutzungskomfort dadurch erreicht, dass einerseits die Flüssigkeitsversorgung für alle Nasszellen in einem gleichen Maß gewährleistet wird und andererseits der Nutzerkomfort erhöht wird, indem möglichst viele Nasszellen und/oder eine möglichst große Vorratsmenge an Flüssigkeit bereitgestellt wird.

In Figur 2 ist eine Sanitäreinrichtung 20 gemäß einer Ausführungsform in einer schematischen Querschnittansicht gezeigt. Die Sanitäreinrichtung 20 ist beispielsweise in einem Waggon 11 des in Figur 1 gezeigten Schienenfahrzeugs 10 untergebracht, kann alternativ aber auch in einem anderen Fahrzeugtyp untergebracht werden.

Die Sanitäreinrichtung 20 umfasst wenigstens zwei räumlich getrennte Flüssigkeitsbehälter 21, 22 zur Versorgung jeweils einer Verbraucherzelle 23, 24, wobei die Verbraucherzellen 23, 24 hier nur angedeutet sind und deren dargestellte Größe nicht maßstabsgetreu ist. Hier gezeigt ist ein erster Flüssigkeitsbehälter 21, der eine erste Verbraucherzelle 23 mit einer Flüssigkeit versorgt und ein zweiter Flüssigkeitsbehälter 22, der eine zweite Verbraucherzelle 24 mit einer Flüssigkeit versorgt. Bei der Flüssigkeit handelt es sich in dem hier beschriebenen Beispiel um Frischwasser und bei den Verbraucherzellen 23, 24 um Nasszellen eines Waggons 11 eines Schienenfahrzeugs 10 (siehe Figur 1). Die Nasszellen sind jeweils mit einem WC-Modul und/oder Handwaschwassermodul ausgestattet.

Die wenigstens zwei Flüssigkeitsbehälter 21, 22 sind über eine Niveauregulierungseinrichtung 25 miteinander fluidverbunden. Die Niveauregulierungseinrichtung 25 umfasst hier eine Leitung 25, welche die Füllstände der unterschiedlichen Frischwasserbehälter 21, 22 ausgleicht, wenn eine unterschiedliche Menge Frischwasser aus den entsprechenden Frischwasserbehältern 21, 22 entnommen wird. Wenn mehr als zwei Frischwasserbehälter 21, 22 vorgesehen sind, umfasst die Niveauregulierungseinrichtung 25 erforderlichenfalls mehrere Niveauregulierungsleitungen, die miteinander verbunden sind, um die Niveauregulierung zu realisieren. Die Niveauregulierungsleitung 25 ist in dem hier gezeigten Ausführungsbeispiel an einer Unterseite der jeweiligen Flüssigkeitsbehälter 21, 22 angeschlossen, sodass eine Niveauregulierung ohne zusätzliche Pumpsysteme erfolgen kann. In diesem Fall wird die Niveauregulierung durch den Einfluss der Gravitationskraft der Erde herbeigeführt.

Ferner umfasst die Sanitäreinrichtung 20 wenigstens eine Eingangsleitung 26, 26', die zur Befüllung der wenigstens zwei Flüssigkeitsbehälter 21, 22 eingerichtet ist. Eine erste Eingangsleitung 26 ist ausschließlich mit einem ersten Flüssigkeitsbehälter 21 der wenigstens zwei Flüssigkeitsbehälter 21, 22 fluidverbunden, sodass ein zweiter Flüssigkeitsbehälter 22 anders als der erste Flüssigkeitsbehälter 21 nicht direkt, sondern indirekt über die Niveauregulierungsleitung 25 aufgefüllt wird, wenn der Sanitäreinrichtung 20 das Frischwasser über einen ersten Eingang 26a zugeführt wird. Entsprechend weist die Sanitäreinrichtung 20 eine zweite Eingangsleitung 26' mit einem zweiten Eingang 26'a auf, die mit dem zweiten Flüssigkeitsbehälter 22 fluidverbunden ist. Dadurch ist der Wagen 11 von beiden Seiten her befüllbar, sodass in einem einzigen Befüllungsvorgang alle Flüssigkeitsbehälter 21, 22 gleichzeitig betankt werden können. Die Niveauregulierungseinrichtung 25 kann somit außerdem die unterschiedlichen Füllstände bei der Befüllung ausgleichen, sodass hierdurch jeweils auf doppelte Ausführungen der Befüllleitungen verzichtet werden kann.

Des Weiteren umfasst die Sanitäreinrichtung 20 eine Ausgangsleitung 27, welche zur Entleerung des Behälters beispielsweise bei Frostgefahr vorgesehen ist und mit der Niveauregulierungseinrichtung 25 über ein Magnetventil 28 verbunden ist. Somit wird eine elektrische Frostentleerung über das Magnetventil 28 realisiert, bei der die Niveauregulierungsleitung 25 für die gleichzeitige Entleerung der Frischwasserbehälter 21, 22 genutzt werden kann. Durch den Einsatz einer gemeinsamen Entleerungsleitung können separate Entleerungsleitungen für die entsprechenden Frischwasserbehälter 21, 22 eingespart werden. Bei geöffnetem Ventil 28 erfolgt die Entleerung aller Frischwasserbehälter 21, 22 somit (auch) über die Niveauregulierungsleitung 25.

Die Sanitäreinrichtung 20 umfasst je eine Überlauf-Entlüftungsleitung 29a, 29b pro Flüssigkeitsbehälter 21, 22, durch die Luftdruckänderungen während des Befüllens bzw. Entleerens des jeweiligen Flüssigkeitsbehälters 21, 22 mit dem Luftdruck der Umgebung des Fahrzeugs ausgeglichen wird. Die wenigstens zwei Überlauf-Entlüftungsleitungen 29a, 29b sind weiterhin mit der gemeinsamen Ausgangsleitung 27 fluidverbunden, sodass die einzelnen Flüssigkeitsbehälter 21, 22 im Wesentlichen frei von Leckage in dem Waggon 11 untergebracht werden können. Alternativ können auch andere Mittel vorgesehen sein, beispielsweise andere Leitungen(nicht dargestellt), durch die Flüssigkeitsbehälter 21, 22 direkt miteinander verbunden sind, um Gasdruckunterschiede zwischen den Flüssigkeitsbehältern 21, 22 während des Niveauregulierungsvorgangs auszugleichen.

Der hier in einer Querschnittansicht gezeigte Teil des Wagens 11 umfasst einen Dachbereich 11a, einen Unterflurbereich 11b und einen Wageninnenraum 11c. Der Wageninnenraum 11c ist zwischen dem Dachbereich 11a und dem Unterflurbereich 11b angeordnet. In dem hier gezeigten Ausführungsbeispiel sind die wenigstens zwei Flüssigkeitsbehälter 21, 22 hauptsächlich in dem Wageninnenraum 11c angeordnet.

In Figur 3 wird eine Sanitäreinrichtung 20 gemäß einer Ausführungsform in einer schematischen Ansicht gezeigt. Bei der hier illustrierten Sanitäreinrichtung 20 sind die Nasszellen 23, 24 dezentral (d.h. räumlich getrennt voneinander) innerhalb des Waggons 11 platziert. Hier sind die Nasszellen 23, 24 an gegenüberliegenden Seiten des Wagens 11 positioniert.

Ferner ist jede Nasszelle 23, 24 mit zwei räumlich getrennten Frischwasserbehältern 21, 22 ausgestattet. Dabei ist jeder Frischwasserbehälter 21, 22 zur Versorgung genau einer Nasszelle 23, 24 vorgesehen. Beispielsweise wird die erste Nasszelle 23 durch den ersten Frischwasserbehälter 21 mit Frischwasser versorgt und die zweite Nasszelle 24 durch den zweiten Frischwasserbehälter 22 mit Frischwasser versorgt.

Wird nun aus dem ersten Frischwasserbehälter 21 im Verhältnis zum zweiten Frischwasserbehälter 22 eine größere Frischwassermenge pro Zeiteinheit entnommen (beispielsweise aufgrund einer höheren Frequentierung der ersten Nasszelle 23 durch die Passagiere des Schienenfahrzeugs 10), so sorgt die Niveauregulierungseinrichtung dafür, dass die Füllstände der beiden Frischwasserbehälter 21, 22 ausgeglichen werden. In diesem Beispiel wird also Frischwasser aus dem zweiten Frischwasserbehälter 22 zum ersten Frischwasserbehälter 21 transportiert. Dies geschieht bevorzugt durch den Einfluss der Gravitationskraft der Erde. Somit wird auf vergleichsweise einfache Weise eine gleichmäßige Frischwasserverfügbarkeit für beide Nasszellen 23, 24 solange gewährleistet, bis die Gesamtflüssigkeitsmenge aus beiden Frischwasserbehältern 21, 22 aufgebraucht ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Sanitäreinrichtung (20) für ein Fahrzeug (10),
umfassend wenigstens zwei räumlich getrennte Flüssigkeitsbehälter (21, 22) zur Versorgung jeweils einer Verbraucherzelle (23, 24), wobei die wenigstens zwei Flüssigkeitsbehälter (21, 22) über eine Niveauregulierungseinrichtung (25) miteinander fluidverbunden sind.

2. Sanitäreinrichtung (20) nach Anspruch 1,
**dadurch gekennzeichnet, dass**
die Sanitäreinrichtung (20) wenigstens eine Eingangsleitung (26, 26') zur Befüllung der wenigstens zwei Flüssigkeitsbehälter (21, 22) aufweist, wobei eine erste Eingangsleitung (26) der wenigstens einen Eingangsleitung (26, 26') ausschließlich mit einem ersten Flüssigkeitsbehälter (21) der wenigstens zwei Flüssigkeitsbehälter (21, 22) fluidverbunden ist.

3. Sanitäreinrichtung (20) nach Anspruch 2,
**dadurch gekennzeichnet, dass**
eine zweite Eingangsleitung (26') der wenigstens einen Eingangsleitung (26, 26') ausschließlich mit einem zweiten Flüssigkeitsbehälter (22) der wenigstens zwei Flüssigkeitsbehälter (21, 22) fluidverbunden ist.

4. Sanitäreinrichtung (20) nach einem der vorhergehenden Ansprüche,
**dadurch gekennzeichnet, dass**
die Sanitäreinrichtung (20) eine Ausgangsleitung (27), insbesondere zur Frostentleerung, umfasst, wobei die Ausgangsleitung (27) mit der Niveauregulierungseinrichtung (25) verbunden ist.

5. Sanitäreinrichtung (20) nach Anspruch 4,
**dadurch gekennzeichnet, dass**
die Ausgangsleitung (27) mit der Niveauregulierungseinrichtung (25) über ein Ventil (28), insbesondere ein Magnetventil, verbunden ist.

6. Sanitäreinrichtung (20) nach Anspruch 4 oder 5,
**dadurch gekennzeichnet, dass**
die Sanitäreinrichtung (20) wenigstens zwei Überlauf-Entlüftungsleitungen (29a, 29b) aufweist, die mit jeweils einem der wenigstens zwei Flüssigkeitsbehälter (21, 22) und mit der Ausgangsleitung (27) fluidverbunden sind.

7. Fahrzeug (10) mit einer Sanitäreinrichtung (20) nach einem der vorhergehenden Ansprüche,
**dadurch gekennzeichnet, dass**
das Fahrzeug (10) wenigstens einen Wagen (11, 11') aufweist, wobei die Sanitäreinrichtung (20) innerhalb desselben Wagens (11) angeordnet ist.

8. Fahrzeug (10) nach Anspruch 7,
**dadurch gekennzeichnet, dass**
das Fahrzeug (10) ein Schienenfahrzeug ist.

9. Fahrzeug (10) nach einem der Ansprüche 7 oder 8,
**dadurch gekennzeichnet, dass**
die wenigstens zwei Flüssigkeitsbehälter (21, 22) dezentral in demselben Wagen (11) angeordnet sind.

10. Fahrzeug (10) nach einem der Ansprüche 7 bis 9,
**dadurch gekennzeichnet, dass**
der Wagen (11) einen Dachbereich (11a), einen Unterflurbereich (11b) und einen Wageninnenraum (11c) zwischen dem Dachbereich (11a) und dem Unterflurbereich (11b) aufweist, wobei die wenigstens zwei Flüssigkeitsbehälter (21, 22) hauptsächlich in dem Wageninnenraum (11c) angeordnet sind.

## Claims

1. Plumbing appliance (20) for a vehicle (10), comprising at least two physically separated liquid containers (21, 22) for supplying a respective consumer cell (23, 24), wherein the at least two liquid containers (21, 22) are connected fluidically to each other via a level regulating device (25).

2. Plumbing appliance (20) according to Claim 1,
**characterized in that**
the plumbing appliance (20) has at least one input line (26, 26') for filling the at least two liquid containers (21, 22), wherein a first input line (26) of the at least one input line (26, 26') is exclusively connected fluidically to a first liquid container (21) of the at least two liquid containers (21, 22).

3. Plumbing appliance (20) according to Claim 2,
**characterized in that**
a second input line (26') of the at least one input line (26, 26') is exclusively connected fluidically to a second liquid container (T2) of the at least two liquid containers (21, 22).

4. Plumbing appliance (20) according to one of the preceding claims,
**characterized in that**
the plumbing appliance (20) comprises an output line (27), in particular for frost emptying, wherein the output line (27) is connected to the level regulating device (25).

5. Plumbing appliance (20) according to Claim 4,
**characterized in that**
the output line (27) is connected to the level regulating device (25) via a valve (28), in particular a solenoid valve.

6. Plumbing appliance (20) according to Claim 4 or 5,
**characterized in that**
the plumbing appliance (20) has two overflow vent lines (29a, 29b), which are each connected fluidically to one of the two liquid containers (21, 22) and to the output line (27).

7. Vehicle (10) having a plumbing device (20) according to one of the preceding claims,
**characterized in that**
the vehicle (10) has at least one carriage (11, 11'), wherein the plumbing appliance (20) is arranged within the same carriage (11).

8. Vehicle (10) according to Claim 7,
**characterized in that**
the vehicle (10) is a rail vehicle.

9. Vehicle (10) according to either of Claims 7 and 8,
**characterized in that**
the at least two liquid containers (21, 22) are arranged decentrally in the same carriage (11).

10. Vehicle (10) according to one of Claims 7 to 9,
**characterized in that**
the carriage (11) has a roof area (11a), an underfloor area (11b) and a carriage interior (11c) between the roof area (11a) and the underfloor area (11b), wherein the at least two liquid containers (21, 22) are mainly arranged in the carriage interior (11c).

## Revendications

1. Dispositif (20) sanitaire d'un véhicule (10), comprenant au moins deux récipients (21, 22) à liquide séparés dans l'espace alimentant chacun une cellule (23, 24) de consommateur, les au moins deux récipients (21, 22) à liquide communiquant entre eux par un dispositif (25) de régulation du niveau.

2. Dispositif (20) sanitaire suivant la revendication 1,
**caractérisé en ce que**
le dispositif (20) sanitaire a au moins un conduit (26, 26') d'entrée pour remplir les au moins deux récipients (21, 22) à liquide, un premier conduit (26) d'entrée du au moins un conduit (26, 26') d'entrée communiquant exclusivement avec un premier récipient (21) à liquide des au moins deux récipients (21, 22) à liquide.

3. Dispositif (20) sanitaire suivant la revendication 2,
**caractérisé en ce qu'**
un autre conduit (26') d'entrée du au moins un conduit (26, 26') d'entrée communique exclusivement avec un deuxième récipient (22) à liquide des au moins deux récipients (21, 22) à liquide.

4. Dispositif (20) sanitaire suivant l'une des revendications précédentes,
**caractérisé en ce que**
le dispositif (20) sanitaire comprend un conduit (27) de sortie, notamment de vidange de givre, le conduit (27) de sortie communiquant avec le dispositif (25) de régulation de niveau.

5. Dispositif (20) sanitaire suivant la revendication 4,
**caractérisé en ce que**
le conduit (27) de sortie communique avec le dispositif (25) de régulation de niveau par une vanne (28), notamment par une électrovanne.

6. Dispositif (20) sanitaire suivant la revendication 4 ou 5,
**caractérisé en ce que**
le dispositif (20) sanitaire a au moins deux conduits (29a, 29b) de purge d'air de trop plein, qui communiquent avec, respectivement, l'un des au moins deux récipients (21, 22) à liquide et avec le conduit (27) de sortie.

7. Véhicule (10) ayant un dispositif (20) sanitaire suivant l'une des revendications précédentes,
**caractérisé en ce que**
le véhicule (10) a au moins une voiture (11, 11'), le dispositif (20) sanitaire étant disposé à l'intérieur de la même voiture (11).

8. Véhicule (10) suivant la revendication 7,
**caractérisé en ce que**
le véhicule (10) est un véhicule ferroviaire.

9. Véhicule (10) suivant l'une des revendications 7 ou 8,
**caractérisé en ce que**
les au moins deux récipients (21, 22) à liquide sont disposés de manière décentrée dans la même voiture (11).

10. Véhicule (10) suivant l'une de revendications 7 à 9,
**caractérisé en ce que**
la voiture (11) a une partie (11a) de toit, une partie (11b) sous caisse et un espace (11c) intérieur de voiture, les au moins deux récipients (21, 22) à liquide étant disposés principalement dans l'espace (11c) intérieur de voiture.
